(19) Europäisches Patentamt
European Patent Office
Office européen des brevets

(11) EP 3 878 664 B1

(12) # EUROPEAN PATENT SPECIFICATION

(45) Date of publication and mention of the grant of the patent:
**19.02.2025 Bulletin 2025/08**

(21) Application number: **19882912.9**

(22) Date of filing: **06.11.2019**

(51) International Patent Classification (IPC):
***B60C 1/00*** (2006.01) ***C08L 67/00*** (2006.01)
***C08L 91/00*** (2006.01) ***C08L 101/02*** (2006.01)
***C08L 63/00*** (2006.01) ***C08G 59/02*** (2006.01)
***C08G 59/32*** (2006.01) ***C08L 67/02*** (2006.01)

(52) Cooperative Patent Classification (CPC):
(C-Sets available)
**C08K 5/103; B60C 1/0041; C08G 59/027; C08G 59/32; C08K 5/1515; C08K 7/06; C08L 63/00; C08L 67/02; C08L 91/00; C08L 101/06;** B60C 2001/005; B60C 2001/0066; Y02T 10/86 (Cont.)

(86) International application number:
**PCT/JP2019/043419**

(87) International publication number:
**WO 2020/095926 (14.05.2020 Gazette 2020/20)**

(54) **RESIN-METAL COMPOSITE MEMBER FOR TIRE, AND TIRE**

HARZ-METALL-VERBUNDKÖRPER FÜR REIFEN UND REIFEN

ÉLÉMENT COMPOSITE RÉSINE-MÉTAL POUR PNEU, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2018 JP 2018211227**

(43) Date of publication of application:
**15.09.2021 Bulletin 2021/37**

(73) Proprietor: **BRIDGESTONE CORPORATION**
**Chuo-ku**
**Tokyo 104-8340 (JP)**

(72) Inventor: **ANZAI, Hiroyuki**
**Tokyo 104-8340 (JP)**

(74) Representative: **Marks & Clerk LLP**
**15 Fetter Lane**
**London EC4A 1BW (GB)**

(56) References cited:
**JP-A- 2007 119 629**
**JP-A- 2008 274 206**
**JP-A- 2008 274 207**
**JP-A- 2018 079 899**
**US-A1- 2010 256 261**
**US-A1- 2016 053 096**

- **BARRETT L W ET AL: "CRYSTALLIZATION KINETICS OF POLY(ETHYLENE TEREPHTHALATE) IN COMPOSITIONS CONTAINING NATURALLY FUNCTIONALIZED TRIGLYCERIDE OIL", JOURNAL OF APPLIED POLYMER SCIENCE, JOHN WILEY & SONS, INC, US, vol. 48, no. 6, 10 May 1993 (1993-05-10), pages 1035 - 1050, XP000462303, ISSN: 0021-8995, DOI: 10.1002/APP.1993.070480611**
- **BUONG CHIENG ET AL: "Epoxidized Vegetable Oils Plasticized Poly(lactic acid) Biocomposites: Mechanical, Thermal and Morphology Properties", MOLECULES, vol. 19, no. 10, 8 October 2014 (2014-10-08), pages 16024 - 16038, XP055245103, DOI: 10.3390/molecules191016024**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 878 664 B1

(52) Cooperative Patent Classification (CPC): (Cont.)

C-Sets
**C08K 5/103, C08L 67/02;**
**C08K 5/103, C08L 67/025;**
**C08K 5/103, C08L 67/06;**
**C08K 5/1515, C08L 67/02;**
**C08K 5/1515, C08L 67/025;**
**C08K 5/1515, C08L 67/06;**
**C08K 7/06, C08L 67/02;**
**C08L 63/00, C08K 5/103;**
**C08L 63/00, C08L 67/02;**
**C08L 67/02, C08K 5/103;**
**C08L 101/06, C08K 5/103**

## Description

[Technical Field]

The present disclosure relates to a resin-metal composite member for a tire, and a tire.

[Background Art]

Conventionally, as an attempt to enhance the durability (stress resistance, inner-pressure resistance, and rigidity) of a tire (such as stress resistance, inner-pressure resistance and rigidity), a reinforcing belt member is provided at an outer periphery of a tire. Specifically, a reinforcing cord formed of a metal member is wound around an outer periphery of a tire in a spiral manner.

In addition, a tire is usually provided with a bead member, which functions to fix a tire to a rim, at a position at which the tire contacts the rim, and the bead member includes a metal wire as a bead wire.

As a method for improving the adhesion durability of a metal member with respect to a tire, a method of covering the metal member such as a reinforcing member or a bead wire with a resin has been proposed.

For example, Japanese Patent Application Laid-Open (JP-A) No. 2012-046025 discloses a tire that has a tire frame, which is formed from at least a thermoplastic resin material and has a circular shape, and a reinforcing cord member that is wound around an outer periphery of the tire frame in a circumferential direction to form a reinforcing cord layer, wherein the thermoplastic resin material includes a polyester thermoplastic elastomer.

Further reference is made to resin compositions and materials for use in tires disclosed in US 2010/256261 A1; US 2016/053096 A1; Barrett L W et al., Journal of Applied Polymer Science, 1993, vol.48, no.6, p1035-1050; Buong Chieng et al., Molecules, 2014, vol.19, no. 10, p16024-16038; JP-A-2008274206; JP-A-2008274207; and EP-A-1782966.

[Summary of the Invention]

[Problem to be Solved by the Invention]

When a resin material having an ester bond, such as a polyester thermoplastic elastomer used in the tire disclosed in JP-A 2012-046025, is subjected to a high-temperature and high-moisture environment, hydrolysis of an ester bond due to the moisture entering from the outside may become a cause of deterioration of the tire.

As such, there is demand for a resin material for a tire that exhibits suppressed deterioration under a high-temperature and high-moisture environment, a resin-metal composite member for a tire using the resin material for a tire, and a tire having the resin-metal composite member for a tire.

Means for Solving the Problem

A resin-metal composite member for a tire, comprising a metal member and a resin layer disposed around the metal member, the resin layer comprising a glyceride compound and a resin having an ester bond.

[Effect of the Invention]

According to the disclosure, a resin-metal composite member for a tire using a resin material for a tire that exhibits suppressed deterioration under a high-temperature and high-moisture environment, and a tire having the resin-metal composite member for a tire are provided.

[Brief Explanation of the Drawings]

FIG. 1A is a perspective view illustrating a cross-section of a part of a tire according to a first embodiment;
FIG. 1B is a cross-sectional view illustrating a bead portion attached to a rim;
FIG. 2 is a cross-sectional view taken along a tire rotation axis, which illustrates a state where a reinforcing cord is embedded in a crown portion of a tire frame of the tire according to the first embodiment;
FIG. 3 is a drawing for explaining operations of embedding the reinforcing cord in the crown portion of the tire frame using a reinforcing cord heater and rollers;
FIG. 4 is a perspective view illustrating a cross-section of a part of a tire according to the second embodiment; and
FIG. 5 is an enlarged drawing of the bead portion of the tire shown in FIG. 4.

[Mode for Carrying Out the Invention]

Specific embodiments of the disclosure are described below in detail; however, the disclosure is not restricted to the below-described embodiments by any means, and the disclosure can be carried out with modifications as appropriate within the scope of the disclosure.

The term "resin" used herein is a concept that encompasses thermoplastic resins, thermoplastic elastomers and thermosetting resins, but not vulcanized rubbers.

In the following explanation, resins of the "same kind" refers to resins having a structure that forms a main that is in in common with each other, for example, resins having an ester structure or resins having a styrene structure.

In the present specification, the numerical ranges described as "from ... to ..." includes the lower limit value and the upper limit value, respectively.

The term "step" used herein encompasses not only an independent step but also a step that cannot be clearly distinguished from other steps, as long as the intended purpose of the step is achieved.

In the present specification, the term "thermoplastic resin" refers to a polymer compound that becomes soft and fluid as the temperature is increased and becomes relatively hard as the temperature is decreased, but does not exhibit rubber-like elasticity.

In the present specification, the term "thermoplastic elastomer" refers to a copolymer having a hard segment and a soft segment. Examples of the thermoplastic elastomer include a polymer compound that becomes soft and fluid as the temperature is increased and becomes relatively hard as the temperature is decreased, and exhibits rubber-like elasticity. Specific examples of the thermoplastic elastomer include a copolymer having a polymer that constitutes a hard segment, which is crystalline and has a high melting point or a high cohesive strength, and a polymer that constitutes a soft segment, which is amorphous and has a low glass transition temperature.

The hard segment refers to a component that is relatively harder than the soft segment. The hard segment is preferably a molecular-constraint component that functions as a crosslinkage point of a crosslinked rubber and suppresses plastic deformation. Examples of the hard segment include a structure in which a rigid group such as an aromatic group or an alicyclic group is included in the main backbone; and a structure that enables intermolecular packing by means of hydrogen bond or $\pi$-$\pi$ interaction.

The soft segment refers to a component that is relatively softer than the hard segment. The soft segment is preferably a flexible component that exhibits rubber-like elasticity, and examples thereof include a structure that has a long-chain group (such as a long-chain alkylene group) in the main chain and exhibits a high degree of freedom of molecular rotation elasticity.

<Resin Composition for Tire>

The resin composition for a tire according to the present embodiment is a resin composition for a tire that includes a glyceride compound and a resin having an ester bond (hereinafter, also referred to as a resin composition).

The inventors have found that a resin composition including a glyceride compound and a rein having an ester bond is less prone to deterioration under a high-temperature and high-humidity environment, as compared with a resin composition that includes a resin having an ester bond but does not include a glyceride compound. The reason for this is not exactly clear, but is thought to be that, for example, the ester bond in the glyceride compound exerts some action on the ester bond in the resin and suppresses decomposition of the ester bond in the resin; or the glyceride compound, which is a hydrophobic component, suppresses contact of the resin having an ester bond with moisture.

Further, the inventors have found that, even when the resin having an ester bond to be used in combination with a glyceride compound has an acidic group, the effect of the glyceride compound on a property achieved by the acidic group (such as adhesion) is small. The reason for this is thought to be as follow. As an agent for suppressing deterioration of a resin having an ester bond, a compound that reacts with a carboxy group at a terminal of the resin to deactivate a catalytic action thereof is known. Unlike the compound, a glyceride compound does not react with an acidic group in the resin. Therefore, a glyceride compound can suppress deterioration of a resin without impairing the property achieved by an acidic group (such as adhesion).

(Glyceride compound)

In the present disclosure, the glyceride compound refers to an ester compound of a glycerin and a fatty acid, and the structure thereof is not particularly limited. Examples of the glyceride compound include a compound represented by the following Formula (1).

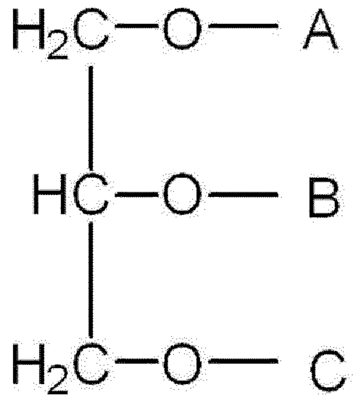

(1)

In Formula (1), each of A, B and C independently represents -C(=O)R or a hydrogen atom, R is a monovalent hydrocarbon group, and at least one of A, B and C is -C(=O)R.

The carbon number of the monovalent hydrocarbon group represented by R in - C(=O)R is not particularly limited. From the viewpoint of suppressing the deterioration under a high-temperature and high-humidity environment, the carbon number of the monovalent hydrocarbon group represented by R is preferably independently from 5 to 40, more preferably from 10 to 30.

The glyceride compound included in the resin composition may be a triglyceride (i.e., a compound represented by Formula (1) in which each of A, B and C is -C(=O)R), a diglyceride (i.e., a compound represented by Formula (1) in which any two of A, B and C are -C(=O)R) and any one of A, B and C is a hydrogen atom) or a monoglyceride (i.e., a compound represented by Formula (1) in which any one of A, B and C is -C(=O)R) and any two of A, B and C are a hydrogen atom. From the viewpoint of suppressing the deterioration under a high-temperature and high-humidity environment, the glyceride compound preferably at least includes a triglyceride.

The glyceride compound included in the resin composition may be an ester compound of glycerin and a saturated fatty acid (i.e., the monovalent hydrocarbon group represented by R in -C(=O)R) is a saturated hydrocarbon group) or an ester compound of glycerin and an unsaturated fatty acid (i.e., the monovalent hydrocarbon group represented by R in -C(=O)R) is an unsaturated hydrocarbon group).

The glyceride compound included in the resin composition preferably includes a glyceride compound having an epoxy group. When the glyceride compound has an epoxy group, bleed out of the glyceride compound tends to be suppressed. This is thought to be because an epoxy group of the glyceride compound acts with the ester bond of the resin, and allows the glyceride compound to exist in the resin composition in a more stable manner.

In the present disclosure, a glyceride compound having an epoxy group refers to a glyceride compound that has an epoxy group at a portion of a hydrocarbon group thereof. A glyceride compound having an epoxy group may be obtained by modifying an unsaturated bond in a glyceride compound, which is obtained by esterification of glycerin and an unsaturated fatty acid, to an epoxy group by a known method, for example.

The glyceride compound included in the resin composition may be an oil or a fat. The oil or the fat may be derived from a natural product (including a processed product of an oil or a fat derived from a natural product) or may be a synthesized product. From the viewpoint of availability or the like, the glyceride compound is preferably an oil or a fat derived from a natural product, more preferably plant-derived oils.

Specific examples of the plant-derived oils include soybean oil, rapeseed oil, sunflower oil, palm oil, palm kernel oil, cottonseed oil, peanut oil, olive oil, corn oil, sesame oil, castor oil, linseed oil, and processed products thereof such as epoxidized oils.

Epoxidized plant-derived oils are available as commercial products, and examples thereof include ADEKA CIZER O-130P (Adeka Corporation, epoxidized soybean oil) and ADEKA CIZER O-180A (Adeka Corporation, epoxidized linseed oil).

The amount of the glyceride compound included in the resin composition is not particularly limited. From the viewpoint of suppressing the deterioration under a high-temperature and high-humidity environment, the amount of the glyceride compound is preferably 3 parts by mass or more, more preferably 5 parts by mass or more, further preferably 10 parts by mass or more, with respect to 100 parts by mass of the resin having an ester bond.

From the viewpoint of suppressing the bleed out of the glyceride compound, the amount of the glyceride compound is preferably 30 parts by mass or less, more preferably 25 parts by mass or less, further preferably 20 parts by mass or less, with respect to 100 parts by mass of the resin having an ester bond.

(Resin having ester bond)

The resin composition includes a resin having an ester bond. The type of the resin having an ester bond is not particularly limited, and may be selected depending on the portion of a tire at which the resin composition is used, and the like. Examples of the resin having an ester bond include a polyester thermoplastic elastomer and a polyester thermoplastic resin. The resin composition may include a single kind of a resin having an ester bond, or may include two or more kinds thereof. The resin composition may include a polyester thermoplastic elastomer and a polyester thermoplastic resin in combination.

-Polyester thermoplastic elastomer-

The polyester thermoplastic elastomer is, for example, a polymer compound in which at least a polyester forms a hard segment that is crystalline and has a high melting point, and a soft segment that is amorphous and has a low glass transition temperature is formed from a different polymer (for example, polyester or polyether).

Examples of a polyester that forms a hard segment of a polyester thermoplastic elastomer include an aromatic polyester. The aromatic polyester can be formed from, for example, an aromatic dicarboxylic acid or an ester-forming derivative thereof, and an aliphatic diol. The aromatic polyester is preferably polybutylene terephthalate, which is derived from at least one of terephthalic acid or dimethyl terephthalate and 1,4-butanediol. The aromatic polyester may be a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof) and a diol having a molecular weight of 300 or less, such as an aliphatic diol (e.g., ethylene glycol, trimethylene glycol, pentamethylene glycol, hexamethylene glycol, neopentyl glycol or decamethylene glycol), an alicyclic diol (e.g., 1,4-cyclohexane dimethanol or tricyclodecane dimethylol) or an aromatic diol (e.g., xylylene glycol, bis(p-hydroxy)diphenyl, bis(p-hydroxyphenyl)propane, 2,2-bis[4-(2-hydroxyethoxy)phenyl] propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl), or may be a copolymerized polyester in which two or more kinds of these dicarboxylic acid components and diol components are used in combination. Further, for example, a polyfunctional carboxylic acid component, a polyfunctional oxyacid component or a polyfunctional hydroxy component, which has three or more functional groups, can be copolymerized at an amount of 5% by mole or less.

Specific examples of the polyester that forms a hard segment include polyethylene terephthalate, polybutylene terephthalate, polymethylene terephthalate, polyethylene naphthalate and polybutylene naphthalate, among which polybutylene terephthalate is preferred.

Examples of a polymer that forms a soft segment include an aliphatic polyether and an aliphatic polyester.

Examples of the aliphatic polyether include poly(ethylene oxide) glycol, poly(propylene oxide) glycol, poly(tetramethylene oxide) glycol, poly(hexamethylene oxide) glycol, copolymers of ethylene oxide and propylene oxide, ethylene oxide-addition polymers of poly(propylene oxide) glycol, and copolymers of ethylene oxide and tetrahydrofuran.

Examples of the aliphatic polyester include poly($\varepsilon$-caprolactone), polyenantholactone, polycaprylolactone, polybutylene adipate, and polyethylene adipate.

Among these aliphatic polyethers and aliphatic polyesters, from the standpoint of elastic properties of the resulting polyester block copolymer, poly(tetramethylene oxide) glycol, an ethylene oxide-adduct of poly(propylene oxide) glycol, poly($\varepsilon$-caprolactone), polybutylene adipate and polyethylene adipate are preferred as the polymer that forms a soft segment.

From the standpoints of toughness and flexibility at low temperature, the number-average molecular weight of the polymer that forms a soft segment is preferably from 300 to 6,000. Further, from the standpoint of moldability, the mass ratio (x:y) of the hard segment (x) and the soft segment (y) is preferably from 99:1 to 20:80, more preferably from 98:2 to 30:70.

Examples of the combination of the hard segment and the soft segment as mentioned above include each of the exemplary combination of the hard segment and the soft segment as mentioned above. Among the exemplary combinations, a combination of polybutylene terephthalate as a hard segment and an aliphatic polyether as a soft segment is preferred, and a combination of polybutylene terephthalate as a hard segment and poly(ethylene oxide)glycol as a soft segment is more preferred.

Examples of the commercially available products of a polyester thermoplastic elastomer include the HYTREL Series manufactured by DuPont-Toray Co., Ltd. (e.g., 3046, 5557, 6347, 4047 and 4767), the PELPRENE Series manufactured by TOYOBO Co., Ltd. (e.g., P30B, P40B, P40H, P55B, P70B, P150B, P280B, P450B, P150M, S1001, S2001, S5001, S6001 and S9001) and the PREMALLOY (TEFABLOC) Series manufactured by Mitsubishi Chemical Corporation (e.g., GQ742 and GQ730).

The polyester thermoplastic elastomer can by synthesized by copolymerizing a polymer that forms a hard segment and a polymer that forms a soft segment by a known method.

-Polyester thermoplastic resin-

Examples of the polyester thermoplastic resin include a polyester that forms a hard segment of the polyester thermoplastic elastomer as described above.

Specific examples of the polyester thermoplastic resin include an aliphatic polyester such as polylactic acid, polyhydroxy-3-butyl butyrate, polyhydroxy-3-hexyl butylate, poly(ε-caprolactone), polyenanthonolactone, polycaprylolactone and polybutylene adipate; and an aromatic polyester such as polyethylene terephthalate (PET), polybutylene terephthalate (PBT), polyethylene naphthalate (PEN) and polybutylene naphthalate (PBN). Among these, from the viewpoint of heat resistance and processability, the polyester thermoplastic resin is preferably an aromatic polyester, more preferably polybutylene terephthalate, polyethylene terephthalte, polybutylene naphthalate or polyethylene naphthalate, further preferably polybutylene terephthalate.

As a commercial product of the polyester thermoplastic resin, for example, DURANEX series (such as 201AC, 2000 and 2002) from Polyplastics Co., Ltd., NOVADURAN series (such as 5010R5 and 5010R3-2) from Mitsubishi Engineering-Plastics Corporation, and TORAYCON series (such as 1401X06 and 1401X31) from Toray Industries, Inc. may be used.

The resin having an ester bond may have an acidic group (acid-modified) such as a maleic anhydride group, a carboxy group, a sulfuric acid group or a phosphoric acid group. By performing the acid-modification, it is possible to enhance the adhesion of the resin having an ester bond.

The acid-modified resin having an ester bond may be obtained by, for example, bonding an unsaturated bond of an unsaturated compound having an acidic group to a resin having an ester bond.

Examples of the commercial products of the acid-modified resin having an ester bond include the PREMALLOY (TEFABLOC) Series manufactured by Mitsubishi Chemical Corporation (e.g., GQ742 and GQ730) as a polyester thermoplastic elastomer having a maleic anhydride group.

The equivalent amount of the acidic group (equivalent amount of maleic anhydride group when the acidic group is a maleic anhydride group) in the acid-modified resin having an ester bond is not particularly limited, and may be from $1 \times 10^{-6}$ eq/g to $1 \times 10^{-4}$ eq/g, for example.

Since the glyceride compound does not react with an acidic group, even when an acidic group is introduced into the resin having an ester bond. Therefore, the adhesion of the resin composition can be favorably maintained without being affected by the glyceride compound.

In an embodiment, for the purpose of adjusting the hardness, the resin having an ester bond may be a mixture of a polyester thermoplastic elastomer and a polyester thermoplastic resin that is formed of a structural unit of the same kind as the hard segment of the polyester thermoplastic elastomer. The ratio of the hard segment in the resin mixture (hereinafter, also referred to as the HS ratio) may be from 60% by mass to less than 90% by mass.

When the resin having an ester bond is a resin mixture satisfying the above conditions, a resin-metal composite member having a resin layer formed from the resin mixture tends to exhibit an improved cornering power of a tire, while maintaining a favorable low-temperature impact resistance, as compared with a resin-metal composite member having a resin layer formed from a resin mixture that does not satisfy the above conditions. This is thought to be because the cornering power is improved as the rigidity of the resin layer is increased by adjusting the HS ratio of the resin mixture to be 60% by mass or more, while the low-temperature impact resistance is kept favorable as the rigidity of the resin layer is not excessively high by adjusting the HS ratio of the resin mixture to be less than 90% by mass.

Further, it is found that a resin mixture obtained by blending a polyester thermoplastic resin to a polyester thermoplastic elastomer to have a total HS ratio of from 60% by mass to less than 90% by mass exhibits a superior low-temperature impact resistance, as compared with a polyester thermoplastic elastomer that has a HS ratio within the same range. The reason for this is not exactly clear, but it is thought to be because a sea-island structure is formed by the polyester thermoplastic elastomer and the polyester thermoplastic resin, rather than mixing each other.

Further, by adjusting the HS ratio of the resin mixture to be 60% by mass or less, it is possible to expect an effect of improving the moisture-heat resistance or the plunger resistance as a result of increasing the moisture barrier property of the metal member to be coated with the resin layer.

Specific examples of a combination of a polyester thermoplastic elastomer and a polyester thermoplastic resin having a structural unit of the same kind as a hard segment of the polyester thermoplastic elastomer include a combination of a polyester thermoplastic elastomer having a hard segment selected from polybutylene terephthalate (PBT), polyethylene terephthalate (PET), polybutylene naphthalate (PBN) or polyethylene naphthalate (PEN) and a polyester thermoplastic resin having a structural unit of the same kind as the hard segment of the polyester thermoplastic elastomer (i.e., PBT, PET, PBT or PEN).

In the present specification, the HS ratio of the resin mixture refers to a ratio of a hard segment (HS) with respect to a total of a hard segment (HS) and a soft segment (SS) in the resin mixture, and is calculated by the following formula. The "hard segment (HS) in the resin mixture" used herein refers to a total of a hard segment of the polyester thermoplastic elastomer and a structural unit of the polyester thermoplastic resin that is the same kind as the hard segment of the

polyester thermoplastic elastomer.

$$HS\ ratio\ (\%\ by\ mass) = \{HS/(HS+SS)\} \times 100$$

The HS ratio of the resin mixture can be measured by a nuclear magnetic resonance (NMR) method as described below, for example.

A sample is prepared by diluting and dissolving the resin with HFIP-$d_2$ (1,1,1,3,3,3-hexafluoroisopropanol-$d_2$) as a solvent at 20 mg/2 g, and carrying out $^1$H-NMR measurement using AL400 (JEOL Ltd.) as an NMR analyzer at room temperature.

The HS ratio of the resin mixture may be, for example, from 63% by mass to 74.5% by mass.

The method for determining whether or not the resin mixture includes a polyester thermoplastic elastomer and a polyester thermoplastic resin is not particularly limited, and may be carried out by thermal analysis, observation of a section of the resin mixture, or the like.

From the viewpoint of maintaining a favorable low-temperature impact resistance, the resin mixture preferably has a sea-island structure. Specifically a polyester thermoplastic elastomer and a polyester thermoplastic resin preferably exist in the resin mixture without mixing earth other.

In the present specification, whether or not the resin mixture has a sea-island structure can be determined based on the size of a region that corresponds to an island (domain). Specifically, for example, when a domain with a maximum diameter of 0.1 μm or more is observed at a section of the resin mixture with an atomic force micrometer (AFN), it is determined that the resin mixture has a sea-island structure.

The sea-island structure of the resin mixture is preferably formed of a matrix that includes a polyester thermoplastic elastomer and a domain that includes a polyester thermoplastic resin. In that case, the resin mixture tends to exhibit favorable low-temperature impact resistance, because of a structure in which a polyester thermoplastic resin that is highly rigid is dispersed in a polyester thermoplastic elastomer that exhibits elasticity.

The sea-island structure of the resin mixture preferably has a domain size of from 0.1 μm to 10 μm, more preferably from 0.1 μm to 5 μm, further preferably from 0.1 μm to 1 μm. In the present specification, the domain size refers to the average value of the maximum diameter of the domains observed in the sea-island structure. The average value of the maximum diameter of the domains refers to an arithmetic average value of the maximum diameter of 100 domains that are arbitrarily selected at a section of the resin mixture when observed with an AFM.

From the viewpoint of maintaining a favorable low-temperature impact resistance, the resin mixture preferably has two or more peaks in a Tan δ curve obtained by viscoelasticity measurement. When the resin mixture has two or more peaks in a Tan δ curve obtained by viscoelasticity measurement, it can be determined that two or more kinds of resin components are in the resin mixture without mixing each other (i.e., forming a sea-island structure).

The Tan δ curve preferably has at least a peak derived from a polyester thermoplastic elastomer and a peak derived from a polyester thermoplastic resin. When the Tan δ curve has a peak derived from a polyester thermoplastic elastomer and a peak derived from a polyester thermoplastic resin, it can be determined that the polyester thermoplastic elastomer and the polyester thermoplastic resin are in the resin mixture without mixing each other (i.e., forming a sea-island structure).

The Tan δ curve preferably has a peak derived from a polyester thermoplastic elastomer at a low-temperature side and a peak derived from a polyester thermoplastic resin at a high-temperature side.

Further, the Tan δ curve preferably has a peak derived from a polyester thermoplastic elastomer in a temperature range of 0°C or less. When the Tan δ curve has a peak derived from a polyester thermoplastic elastomer in a temperature range of 0°C or less, the polyester thermoplastic elastomer is not too rigid and a favorable low-temperature impact resistance tends to be maintained. The lower limit of the temperature range at which the peak derived from a polyester thermoplastic elastomer exists is not particularly limited, but is preferably not less than -10°C.

The temperature range at which the peak derived from a polyester thermoplastic resin exists is not particularly limited, but is preferably from 45°C to 150°C.

In the present specification, the Tan δ curve can be obtained by, for example, using a sample having a size of 6 mm in width, 38 mm in length and 2 mm in thickness, and a viscoelasticity measurement device (TA Instruments, ARES-G2). The measurement may be carried out in a torsion test mode with a gap of 20 mm at a temperature range of from -100°C to 150°C, a torsion of 0.28% and 35 Hz.

As necessary, the resin composition may include a resin not having an ester bond. The type of the resin not having an ester bond is not particularly limited, and examples thereof include a thermoplastic elastomer and a thermoplastic resin that may be used in a tire frame or a carcass as described below.

When the resin composition includes a resin having an ester bond and a resin not having an ester bond, from the viewpoint of a strength of a member formed from the resin composition, the proportion of the resin having an ester bond in the total resin is preferably 50% by mass or more, more preferably 70% by mass or more, further preferably 80% by mass or

more.

(Other components)

As necessary, the resin composition may include other components than the resin and the glyceride compound.
Examples of the other components include a rubber, a filler (such as silica, carcium carbonate and clay), an antiaging agent, a plasticizer, a colorant, a weather resistance agent and a reinforcing agent.
When the resin composition includes other components than the resin and the glyceride compound, the content of the other components in the total resin is preferably 20% by mass or more, more preferably 10 % by mass or more, further preferably 50% by mass or more.
The type of a member for a tire obtained by using the resin composition is not particularly limited, and examples thereof include a tire frame, a belt member, a bead member and the like.

<Resin-metal composite member>

The resin-metal composite member according to the present embodiment includes a metal member and a resin layer that is disposed around the metal member, and the resin layer includes a glyceride compound and a resin having an ester bond.
The shape of the resin-metal composite member is not particularly limited, and may be a cord-like shape, a sheet-like shape or the like.
The resin-metal composite member may be used as a reinforcing belt member, which is disposed around an outer periphery of a tire frame or a carcass that forms a tire, or as a bead member that is disposed at a portion at which a tire contacts a rim.
For example, in a case of a reinforcing belt member, the resin-metal composite member may be used as a belt layer in which single or multiple cord-shaped resin-metal composite members are disposed around a tire frame or a carcass along a circumferential direction thereof; or as a belt layer in which plural cord-like resin-metal composite members are disposed around a tire along a circumferential direction thereof.

[Resin layer]

The resin layer includes a glyceride compound and a resin having an ester bond. Preferred embodiments of the glyceride compound and the resin having an ester bond are the same as the preferred embodiments of the glyceride compound and the resin having an ester bond that may be included in the resin composition, as mentioned above.
The content of the glyceride compound in the resin layer is not particularly limited. From the viewpoint of suppressing the deterioration under a high-temperature and high-humidity environment, the content of the glyceride compound is preferably 3 parts by mass or more, more preferably 5 parts by mass or more, further preferably 10 parts by mass or more, with respect to 100 parts by mass of the resin having an ester bond.
From the viewpoint of suppressing the bleed out of the glyceride compound, the content of the glyceride compound is preferably 30 parts by mass or less, more preferably 25 parts by mass or less, further preferably 20 parts by mass or less, with respect to 100 parts by mass of the resin having an ester bond.
The resin-metal composite member may have a single resin layer or multiple resin layers. For example, the resin layer may include an adhesive layer that is disposed around the metal member and a cover resin layer that is disposed around the adhesive layer. In that case, either one of the adhesive layer or the cover resin layer may include a glyceride compound and a resin having an ester bond, or both of the adhesive layer and the cover resin layer may include a glyceride compound and a resin having an ester bond.
When the resin layer includes an adhesive layer and a cover resin layer, both of the adhesive layer and the cover resin layer preferably include a resin having an ester bond (i.e., the adhesive layer and the cover resin layer include a resin of the same kind). In that case, a resin composition for forming an adhesive layer and a resin composition for forming a cover resin layer are highly compatible and a resin composition for forming a cover resin layer can be applied onto an adhesive layer in a favorable manner, and the adhesive layer and the cover resin layer can be tightly bonded. When both of the adhesive layer and the cover resin layer include a resin having an ester bond, either one of the adhesive layer or the cover resin layer may include a glyceride compound, or both of the adhesive layer and the cover resin layer may include a glyceride compound.
When the resin layer includes an adhesive layer and a cover resin layer, the resin composition for forming the adhesive layer preferably includes an acid-modified resin as a resin having an ester bond (for example, an acid-modified polyester thermoplastic elastomer). In that case, adhesion of the adhesive layer with respect to the metal member and the cover resin layer tends to be improved.
The average thickness of the cover resin layer is not particularly limited. From the viewpoint of the durability and

the weldability, the average thickness of the cover resin layer is preferably from 10 μm to 1000 μm, more preferably from 50 μm to 700 μm.

The average thickness of the cover resin layer refers to an arithmetic average value of the thicknesses of the cover resin layer measured from five SEM images of a section of the resin-metal composite member, which is obtained by cutting the resin-metal composite member along a direction of layering of the metal member, the adhesive layer and the cover resin layer.

The thickness of the cover resin layer in each SEM image is measured at a portion at which the thickness of the cover resin layer is smallest (for example, at a portion at which a distance between the interface of the adhesive layer and the cover resin layer and an outer periphery of the resin-metal composite member is the smallest).

The thickness of a layer other than a cover resin layer is measured in the same manner.

The average thickness of the adhesive layer is not particularly limited. From the viewpoint of the running comfortability and the durability of a tire, the average thickness of the adhesive layer is preferably from 5 μm to 500 μm, more preferably from 20 μm to 150 μm, further preferably from 20 μm to 100 μm.

The average thickness of the adhesive layers is measured by the same method for the cover resin layer.

The value of $T_1/T_2$, in which $T_1$ refers to an average thickness of the adhesive layer and $T_2$ refers to an average thickness of the cover resin layer, may be from 0.1 to 0.5, for example, preferably from 0.1 to 0.4, more preferably from 0.1 to 0.35. When the value of $T_1/T_2$ is within a range as described above, the tire tends to have improved running comfortability as compared with a tire with a smaller value of $T_1/T_2$, or the tire tends to have improved durability as compared with a tire with a greater value of $T_1/T_2$.

[Metal member]

The metal member is not particularly restricted, and any metal cord that are generally used for the purpose of reinforcing a tire may be employed. Examples of the metal cord include a monofilament composed of a single metal cord (single strand) and a multifilament that is formed from twisted plural metal cords (twisted strand). The metal member may have a shape other than a cord-like shape, such as a plate-like shape.

From the viewpoint of improving the durability of a tire, the metal member is preferably in the form of a monofilament or a multifilament, more preferably a multifilament. The cross-sectional shape, the diameter and the like of the metal member are not particularly restricted, and may be selected in view of the desired properties of a tire.

When the metal member is a twisted strand of plural cords, the number of the cords is not particularly restricted. For example, the number of the cords may be from 2 to 10, preferably from 5 to 9.

From the standpoint of improving the inner pressure resistance of a tire while reducing the weight thereof, the diameter of the metal member is preferably from 0.2 mm to 2 mm, more preferably from 0.8 mm to 1.6 mm. The diameter of the metal member is an arithmetic average value of the diameters measured at arbitrarily selected five points.

The tensile elastic modulus (hereinafter, unless otherwise specified, the term "elastic modulus" used herein refers to a tensile elastic modulus) of the metal member is usually approximately from 100,000 MPa to 300,000 MPa, preferably from 120,000 MPa to 270,000 MPa, more preferably from 150,000 MPa to 250,000 MPa. The tensile elastic modulus of the metal cord is calculated from the slope of a stress-strain curve that is obtained using a tensile tester with a ZWICK-type chuck.

The elongation at break (tensile elongation at break) of the metal member is usually approximately from 0.1% to 15%, preferably from 1% to 15%, more preferably from 1% to 10%. The tensile elongation at break of the metal member can be determined from the strain based on a stress-strain curve that is obtained using a tensile tester with a ZWICK-type chuck.

<Tire>

The tire according to the present embodiment includes the resin-metal composite member for a tire as described above.

In the tire, the resin-metal composite member for a tire is used as a reinforcing belt member, which is wound around an outer periphery of a tire frame or a carcass in a circumferential direction or as a bead member, for example.

In the following, a tire frame and a carcass for the tire according to the present embodiment will be explained.

[Tire frame or carcass]

In the present disclosure, the "carcass" includes a member which is used in conventional rubber tires and is generally referred to as a radial carcass, a bias carcass, a semiradial carcass and the like. A carcass generally has a structure in which a reinforcing member such as a cord or a fiber is coated with a rubber material.

In the present disclosure, the "tire frame" refers to a member that forms a frame of a tire and is formed from a resin

material, i.e., a member that forms a frame of a resin tire.

Examples of the elastic material that forms a carcass include a rubber material as mentioned below. Examples of the elastic material that forms a tire frame include a resin material as mentioned below.

(Elastic material: rubber material)

The rubber material includes a rubber (rubber component), and may include other components than a rubber, such as additives, as long as the effect of the present embodiment is not impaired. The content of the rubber (rubber component) in the rubber material is preferably 50% by mass or more, more preferably 90% by mass or more, with respect to the total amount of the rubber material.

The rubber component is not particularly limited and may be selected from conventional natural rubber and synthetic rubber. The rubber material may include a single kind of rubber component or may include two or more kinds in combination. For example, the rubber as described below or a blend of two or more kinds thereof may be used.

The natural rubber may be a sheet rubber or a block rubber, and may be any rubber selected from RSS #1 to #5.

The synthetic rubber may be diene-type synthetic rubber, diene-type copolymer rubber, special rubber, modified rubber, and the like. Specific examples of the synthetic rubber include a butadiene polymer, such as a copolymer of polybutadiene (BR) and an aromatic vinyl compound (SBR and NBR, for example) and a copolymer of butadiene and other diene compounds, an isoprene polymer such as polyisoprene (IR), a copolymer of isoprene and an aromatic vinyl compound, and a copolymer of isoprene and other diene compounds, chloroprene rubber (CR), butyl rubber (IIR), halogenated butyl rubber (X-IIR), ethylene-propylene copolymer rubber (EPM), ethylene-propylene-diene copolymer rubber (EPDM), and a blend including a rubber as described above.

The rubber material may include a component other than rubber, such as an additive, as necessary.

Examples of the additive include a reinforcing agent such as carbon black, a filler, a vulcanizing agent, a vulcanization accelerator, a fatty acid or a salt thereof, a metal oxide, a process oil, and an antiaging agent.

The carcass formed of a rubber material can be obtained by heating an unvulcanized rubber to cause valcanization thereof.

(Elastic material: resin material)

The resin material includes a resin (resin component), and may include other components than a resin, such as additives, as long as the effect of the present embodiment is not impaired. The content of the resin (resin component) in the resin material is preferably 50% by mass or more, more preferably 90% by mass or more, with respect to the total amount of the resin material.

The resin (resin component) in the resin material includes a thermoplastic resin, a thermoplastic elastomer and a thermosetting resin. From the viewpoint of running comfortability, the resin material preferably includes a thermoplastic elastomer, more preferably a polyamide thermoplastic elastomer.

Examples of the thermosetting resin include a phenol thermosetting resin, a urea thermosetting resin, a melamine thermosetting resin and an epoxy thermosetting resin.

Examples of the thermoplastic resin include a polyamide thermoplastic resin, a polyester thermoplastic resin, an olefin thermoplastic resin, a polyurethane thermoplastic resin, a vinyl chloride thermoplastic resin and a polystyrene thermoplastic resin.

The resin may be used singly or in combination of two or more kinds.

Among the resins as described above, the thermoplastic resin is preferably at least one selected from the group consisting of a polyamide thermoplastic resin, a polyester thermoplastic resin and an olefin thermoplastic resin, more preferably at least one selected from the group consisting of a polyamide thermoplastic resin and an olefin thermoplastic resin.

Examples of the thermoplastic elastomer include a polyamide thermoplastic elastomer (TPA), a polystyrene thermoplastic elastomer (TPS), a polyurethane thermoplastic elastomer (TPU), an olefin thermoplastic elastomer (TPO), a polyester thermoplastic elastomer (TPC), a thermoplastic vulcanizate (TPV) and other thermoplastic elastomers (TPZ), as specified in JIS K6418. From the viewpoint of achiving a sufficient elasticity during running and a suffucient moldability during production, the resin is preferably a thermoplastic resin, more preferably a thermoplastic elastomer.

The resin material for forming a tire frame is preferably a resin of the same kind as a resin included in a cover resin layer of the resin-metal composite member. For example, when a polyester thermoplastic resin or a polyester thermoplastic elastomer is used for a cover resin layer, a polyester thermoplastic resin or a polyester thermoplastic elastomer is preferably used for a tire frame, from the viewpoint of adhesion.

When the tire frame is formed of a resin material that includes a polyester thermoplastic resin or a polyester thermoplastic elastomer (i.e., a resin having an ester bond), the resin material may include a glyceride compound from the viewpoint of suppressing the deterioration under a high-temperature and high-humidity environment. In that case, the

resin having an ester bond and the glyceride compound included in the resin material may be the resin having an ester bond and the glyceride compound included in the resin composition as described above, and preferred examples and details thereof are also the same.

When the tire frame is formed of a resin material that includes a glyceride compound and a resin having an ester bond, the amount of the glyceride compound in the resin material is not particularly limited. From the viewpoint of suppressing the deterioration under a high-temperature and high-humidity environment, the amount of the glyceride compound is preferably 3 parts by mass or more, more preferably 5 parts by mass or more, further preferably 10 parts by mass or more, with respect to 100 parts by mass of the resin having an ester bond.

From the viewpoint of suppressing the bleed out of the glyceride compound, the amount of the glyceride compound is preferably 30 parts by mass or less, more preferably 25 parts by mass or less, further preferably 20 parts by mass or less, with respect to 100 parts by mass of the resin having an ester bond.

-Other components-

As necessary, the elastic material (rubber material or resin material) may include other components than the rubber or the resin.

Examples of the other components include a filler (such as silica, calcium carbonate and clay), an antiaging agent, an oil, a plasticizer, a colorant, a weather resistance agent and a reinforcing agent.

-Properties of elastic material-

When a resin material is used as an elastic material (i.e., in a case of a tire frame for a resin tire), the resin may have a melting point of from 100°C to 350°C, for example. From the viewpoint of durability and productivity of a tire, the resin preferably has a melting point of from 100°C to 250°C, more preferably from 120°C to 250°C.

The tensile elastic modulus, which is defined in JIS K7113:1995, of the elastic material (tire frame) is preferably from 50 MPa to 1,000 MPa, more preferably from 50 MPa to 800 MPa, still more preferably from 50 MPa to 700 MPa. When the tensile elastic modulus of the elastic material is from 50 MPa to 1,000 MPa, attachment of a rim to the tire can be efficiently performed while maintaining the shape of the tire frame.

The tensile strength, which is defined in JIS K7113 (1995), of the elastic material (tire frame) is usually approximately from 15 MPa to 70 MPa, preferably from 17 MPa to 60 MPa, more preferably from 20 MPa to 55 MPa.

The tensile strength at yield, which is defined in JIS K7113 (1995), of the elastic material (tire frame) is preferably 5 MPa or more, more preferably from 5 MPa to 20 MPa, still more preferably from 5 MPa to 17 MPa. When the tensile strength at yield of the elastic material is 5 MPa or more, the tire can endure the deformation upon application of a load during running or the like.

The tensile elongation at yield, which is defined in JIS K7113 (1995), of the elastic material (tire frame) is preferably 10% or more, more preferably from 10% to 70%, still more preferably from 15% to 60%. When the tensile elongation at yield of the elastic material is 10% or more, attachment to a rim can be performed favorably due to a large elastic region.

The tensile elongation at break, which is defined in JIS K7113 (1995), of the elastic material (tire frame) is preferably 50% or more, more preferably 100% or more, still more preferably 150% or more, most preferably 200% or more. When the tensile elongation at break of the elastic material is 50% or more, attachment to a rim can be performed favorably and the tire becomes less likely to break against collision.

The deflection temperature under load (0.45 MPa), which is defined in ISO75-2 or ASTM D648, of the elastic material (tire frame) is preferably 50°C or more, more preferably from 50°C to 150°C, still more preferably from 50°C to 130°C. When the deflection temperature under load of the elastic material is 50°C or more, deformation of the tire frame can be suppressed in a case of performing vulcanization during the production of the tire.

<Configuration of tire>

The tire according to the present embodiment will be described by referring to the drawings.

The drawings are schematically illustrated, and the size or the shape of the members may be exaggerated for ease of understanding. In the embodiments as described below, although the resin-metal composite member is applied at a belt portion, it is possible to apply the resin-metal composite member to the other portions such as a bead portion, in addition to a belt portion.

In the tire according to the present embodiment, when plural members are formed of a resin material, at least one member needs to be formed of a resin material including a glyceride compound and a resin having an ester bond.

For example, when the tire has a tire frame formed of a resin material and a resin-metal composite member formed of a resin material, only a resin material for a tire frame may include a glyceride compound and a resin having an

ester bond; or only a resin material for a resin-metal composite member may include a glyceride compound and a resin having an ester bond; or both resin materials for a tire frame and a resin-metal composite member may include a glyceride compound and a resin having an ester bond.

Alternatively, when the tire has a belt portion formed of a resin material and a bead portion formed of a resin material, only a resin material for a belt portion may include a glyceride compound and a resin having an ester bond; or only a resin material for a bead portion may include a glyceride compound and a resin having an ester bond; or both resin materials for a belt portion and a bead portion may include a glyceride compound and a resin having an ester bond.

(First embodiment)

The tire according to a first embodiment has a tire frame that includes a resin.

FIG. 1A is a perspective view illustrating a cross-section of a part of tire 10 according to the first embodiment. FIG. 1B is a cross-sectional view of a bead portion of tire 10 according to the present embodiment in a state of being attached to a rim (the rim is a separate member from the tire). As illustrated in FIG. 1A, tire 10 has a cross-sectional shape that is substantially the same as that of a conventional and common rubber-made pneumatic tire.

Tire 10 has tire frame 17 that includes a pair of bead portions 12, which are each in contact with bead sheet 21 and rim flange 22 of rim 20; side portions 14, which extend from bead portions 12 toward the outer side along a radial direction of the tire; and a crown portion 16 (outer circumferential portion), which connects the outer ends in the radial direction of side portions 14. Tire frame 17 is formed of a resin material.

Tire frame 17 is formed from a pair of tire frame half sections 17A (i.e., tire frame pieces) having the same shape that are bonded together at the tire equatorial plane. Each of the tire frame harf sections has a ring shape in which one of bead portions 12, one of side portions 14 and a half of crown portion 16 are integrally formed by injection molding.

In bead portion 12, a ring-shaped bead core 18, formed of a steel cord, is embedded. Further, a ring-shaped sealing layer 24, which is composed of rubber having a superior sealing property than the resin material that forms the tire frame 17, is provided at a portion of bead portion 12 at which bead portion 12 contacts rim 20, or at a portion of bead portion 12 at which bead portion 12 contacts rim flange 22 of rim 20.

At crown portion 16, resin-metal composite member 26 as a reinforcing cord is wound along a circumferential direction of tire frame 17 in a spiral manner, such that at least a part of resin-metal composite member 26 is embedded in crown portion 16. At an outer side of resin-metal composite member 26 in a radial direction of the tire, tread 30 that is composed of rubber, which is a material having a superior wear resistance than the resin material that forms tire frame 17, is disposed. Details of resin-metal composite member 26 are described later.

In tire 10 according to the first embodiment, tire frame 17 is formed of a resin material. Since tire frame half sections 17A have a symmetrical shape, i.e., the same shape, production of tire frame half sections 17A can be performed with a single mold.

In tire 10 according to the first embodiment, although tire frame 17 is formed of a single kind of resin material, the embodiment is not restricted to this configuration. For example, different resin materials may be used for respective parts (e.g., side portion 14, crown portion 16 and bead portion 12) as with a case of a conventional rubber-made pneumatic tire. Further, a reinforcing material (e.g., a fiber, a cord, a nonwoven fabric, or a woven fabric, which is made of a polymer material or a metal) may be embedded in order to reinforce each part of tire frame 17. The reinforcing material may not be embedded.

In tire 10 according to the first embodiment, although tire frame half sections 17A are produced by injection molding, the production method thereof is not restricted thereto. For example, tire frame half sections 17A may be produced by vacuum molding, pressure molding, melt casting or the like. Although tire frame 17 is produced by bonding two members (tire frame half sections 17A), the production method of thereof is not restricted thereto. For example, tire frame 17 may be produced as a single member by a molten core method using a metal having a low melting point, a split core method or blow molding. Tire frame 17 may be produced by bonding three or more members.

at bead portion 12 of tire 10, a ring-shaped bead core 18 formed of a metal cord such as a steel cord is embedded. It is possible to use the resin-metal composite member according to the present embodiment as a member including bead core 18. For example, the resin-metal composite member according to the present embodiment may be used to form bead portion 12.

Bead core 18 may be formed of an organic fiber cord, an organic fiber cord having a resin coating, a hard resin or the like, instead of a steel cord. Bead core 18 may be omitted when the rigidity of bead portion 12 is sufficiently ensured and there is no problem in fitting of bead portion 12 with rim 20.

A ring-shaped sealing layer 24, which is composed of rubber, is formed at a portion of bead portion 12 that comes into contact with rim 20, or at least at a portion of bead portion 12 that comes into contact with rim flange 22 of rim 20. Sealing layer 24 may be formed also at a portion at which tire frame 17 (bead portion 12) is in contact with bead sheet 21. Sealing layer 24 is preferably formed of a rubber of the same kind as a rubber used for an outer surface of a bead portion of a conventional rubber-made pneumatic tire. In a case of forming tire frame 17 with a resin material, sealing layer 24 may be

omitted if the resin material that forms tire frame 17 can ensure a sufficient sealing property with the rim 20.

Sealing layer 24 may be formed of a thermoplastic resin or a thermoplastic elastomer that has a superior sealing property as compared with a resin material that forms tire frame 17. Examples of the thermoplastic resin include a polyurethane resin, an olefin resin, a polystyrene resin, a polyester resin, and a blend of these resins with a rubber or an elastomer. Examples of the thermoplastic elastomer include a polyester thermoplastic elastomer, a polyurethane thermoplastic elastomer, an olefin thermoplastic elastomer, a combination of these elastomers, and a blend of these elastomers with a rubber.

In the following, a reinforcing belt member formed of resin cord member 26 will be described. It is possible to use the resin-metal composite member as resin cord member 26.

Fig. 2 shows a sectional view of tire 10 of the first embodiment, in which resin cord member 26 is embedded in a crown portion of tire frame 17.

As shown in Fig. 2, resin cord material 26 is disposed in a spiral manner, and at least a part of resin cord member 26 is embedded in crown portion 16. At a portion at which resin cord member 26 is embedded in crown portion 16, resin cord member 26 is in close contact with the resin material that forms crown portion 16 (tire frame 17). The L in Fig. 2 indicates a depth of embedment of resin cord member 26 in crown portion 16 (tire frame 17) in a direction of rotation axis of the tire. In an embodiment, the depth L is 1/2 of D, which is the diameter of resin cord member 26.

Resin cord member 26 has a structure in which metal member 27 (for example, a steel cord formed by twisting steel fibers) is covered with cover resin layer 28 via adhesive layer 25. At an outer side of resin cord member 26, tread 30 made of rubber is disposed. Tread 30 has a tread pattern of plural grooves on a surface that contacts the ground, like a conventional rubber-made pneumatic tire.

In an embodiment, resin cord member 26, having cover resin layer 28 that includes a thermoplastic elastomer, is embedded in tire frame 17 that is formed of a resin material of the same kind as the thermoplastic elastomer included in cover resin layer 28, such that resin cord member 26 is in close contact with tire frame 17. In this case, a large contact area of cover resin layer 28 and tire frame 17 is secured, thereby improving the durability of resin cord member 26 and tire frame 17. As a result, a tire having an excellent durability can be obtained.

When resin cord member 26 is embedded in crown portion16, the depth of embedment of resin cord member 26 to crown portion 16 (L) is preferably 1/5 or more of the diameter D of resin cord member 26, more preferably greater than 1/2 of the diameter D of resin cord member 26. In a more preferred embodiment, resin cord member 26 is totally embedded in crown portion 16. When L is greater than 1/2 of the diameter D of resin cord member 26, protrusion of resin cord member 26 from the embedded portion is suppressed. When resin cord member 26 is totally embedded in crown portion 16, the surface of crown portion 16 becomes flat, and inclusion of air around resin cord member 26 is suppressed even when a member is disposed on crown portion 16 in which resin cord member 26 is embedded.

In tire 10 of the first embodiment, tread 30 is formed of rubber. However, tread 30 may be formed of a thermoplastic resin material having an excellent abrasion resistance.

In the following, a manufacturing method of the tire of the first embodiment will be explained.

(Tire frame forming process)

First, a pair of tire frame halves, which are supported by a supporting ring formed of a thin metal material, are disposed to face each other. Then, a welding mold is disposed so as to contact the outer surface of the welding potion of the tire frame halves. The welding mold is configured such that it applies a predetermined pressure to a portion around the welding portion (abutting portion) of the tire frame halves (not shown). Then, a pressure is applied to a portion around the welding portion of the tire frame halves at a temperature that is equal to or higher than the melting point (or the softening point) of the thermoplastic resin material used for the tire frame, whereby the welding portion is melted and the tire frame halves are thermally bonded, and tire frame 17 is formed.

(Resin cord member forming process)

In the following, a process of forming a resin cord member, in which the resin cord member is formed of a resin-metal composite member according to the present embodiment, will be explained.

Metal member 27 is reeled out from a reel and the surface thereof is washed. Subsequently, metal member 27 is covered with an adhesive (for example, a resin composition including a polyester thermoplastic elastomer and a glyceride compound) to form a layer as adhesive layer 25. This is further covered with a resin material (for example, a resin composition including a polyester thermoplastic elastomer and a glyceride compound) to form cover resin layer 28, thereby obtaining resin cord member 26. The obtained resin cord member 26 is reeled in reel 58.

(Resin cord member winding process)

In the following, a process of winding a resin cord member will be explained by referring to Fig. 3.

Fig. 3 is a drawing illustrating the operation of positioning resin cord member 26 on a crown portion of a tire frame with a heater and rollers.

In Fig. 3, resin cord member supply apparatus 56 is equipped with reel 58 around which resin cord member 26 is wound; heating apparatus 59 disposed downstream of reel 58 in a direction in which resin cord member 26 is conveyed; first roller 60 disposed downstream of reel 58 in a direction in which resin cord member 26 is conveyed; first cylinder 62 that moves to allow first roller 60 to approach a surface of a tire; second roller 64 disposed downstream of first roller 60 in a direction in which resin cord member 26 is conveyed; and second cylinder 66 that moves to allow second roller 64 to approach a surface of a tire. Second roller 64 may be used also as a cooling roller made of metal. Surfaces of first roller 60 and second roller 64 are coated with a fluororesin (in this embodiment, TEFLON (registered trade name)) in order to suppress adhesion of a molten or softened resin material. By using this apparatus, the heated resin-metal composite is tightly integrated with the resin of a tire frame.

Heating apparatus 59 is equipped with heater 70 and fan 72 for generating a hot wind. Further, heating apparatus 59 is equipped with heating box 74 having a space in which the generated hot wind is supplied and resin cord member 26 is allowed to pass, and outlet 76 from which resin cord member 26 that has been heated is discharged.

First, the temperature of heater 70 of heating apparatus 59 is increased, and a hot air is supplied to heating box 74 by a wind generated by rotating fan 72. Then, resin cord member 26 is reeled out from reel 58 and conveyed to heating box 74, and heated in heating box 74 (for example, to a temperature of from approximately 100°C to 250°C). The heated resin cord member 26 is conveyed through outlet 76, and disposed around crown portion 16 of tire frame 17, which rotates in a direction shown as R in Fig. 3, in a spiral manner with a constant tension. When the cover resin layer of resin cord member 26 contacts crown portion 16, the resin material of crown portion 16 at a portion in contact with the resin layer of resin-metal composite 26 is molten or softened, and the resin layer is welded and integrated with crown portion 16. At this time, since resin cord member 26 is welded also with an adjacent resin cord member 26, resin cord member 26 is wound around so as not to form a space therebetween. Therefore, inclusion of air at a portion at which resin-metal composite 26 is embedded is suppressed.

The depth of embedment of resin cord member 26 (L) may be adjusted by a heating temperature of resin cord member 26, a tension to be applied to resin cord member 26, a pressure applied by first roller 60, and the like. In an embodiment, the conditions are adjusted such that L is at least 1/5 of the diameter of resin-metal composite 26 (D).

Subsequently, tread 30 having a belt-like shape is wound around the outer surface of tire frame 17 in which resin cord member 26 is embedded, and this is subjected to heating (vulcanization) in a vulcanizing case or a mold. Tread 30 may be formed of unvulcanized rubber or vulcanized rubber.

Then, sealing layer 24, which is formed of vulcanized rubber, is bonded to bead portion 12 of tire frame 17 with an adhesive, thereby obtaining tire 10.

In the method of producing a tire of the first embodiment, although welding of tire frame halves 17A is performed by heating the same with a welding mold, the disclosure is not limited thereto. For example, the heating may be performed by a high-frequency heater or the like. Alternatively, tire frame halves 17A may be welded by preliminarily softening or melting the same by heating with a hot air or infrared radiation, and then applying a pressure with a welding mold.

In the method of producing a tire of the first embodiment, although resin cord member supply apparatus 56 has two rollers (first roller 60 and second roller 64), the disclosure is not limited thereto. For example, resin cord member supply apparatus 56 may have either one of these rollers.

In the method of producing a tire of the first embodiment, although a surface of tire frame 17 is melted or softened at a portion in contact with resin cord member 26 that has been heated, the disclosure is not limited thereto. For example, embedment of resin cord member 26 in crown portion 16 may be performed by heating a surface of crown portion 16 by using a hot air generator instead of heating resin cord member 26.

In the method of producing a tire of the first embodiment, although the heating of resin cord member 26 is performed by using a heater and a fan, the disclosure is not limited thereto. For example, resin cord member 26 may be heated directly with radiation heat (such as infrared rays).

In the method of producing a tire of the first embodiment, although a melted or softened portion of the thermoplastic resin material in which resin cord member 26 is embedded is cooled by second roller 64 made of metal, the disclosure is not limited thereto. For example, the melted or softened portion may be cooled with a cold air.

The winding of resin cord member 26 is performed in a spiral manner for ease of production. However, the winding of resin cord member 26 may be performed in a different manner, such as positioning the same in a discontinuous manner in a width direction.

The tire of the first embodiment has a single layer of resin cord member 26, but the tire may have two or more layers of resin cord member 26.

In the method of producing a tire of the first embodiment, a belt-like tread 30 is wound around an outer periphery of

tire frame 17 to which resin cord member 26 is embedded, and is subsequently heated (vulcanized). However, a belt-like tread 30 that has been preliminarily vulcanized may be bonded to an outer periphery of tire frame 17 with an adhesive or the like. Examples of a belt-like tread that has been vulcanized include a precure tread used for a retread tire.

The tire produced by the method of producing a tire of the first embodiment is a tubeless tire (i.e., an air room is formed between tire 10 and rim 20 by attaching bead portion 12 to rim 20). However, the disclosure is not limited thereto. For example, the tire may have a different structure such as a complete tube shape.

(Second embodiment)

The tire according to the second embodiment has a carcass instead of a tire frame.

Fig. 4 is a schematic sectional view in width direction of tire 11 according to the present embodiment. In Fig. 4, rim R is shown by a dashed line for ease of explanation.

As shown in Fig. 4, tire 11 has a pair of bead portions 112 that are disposed at both sides of tire 11 with respect to the tire center line CL; a pair of side portions 111 that extend from bead portions 112 toward the outer side in a radial direction of tire 11; and tread portion 110 that connects side portions 111. Each of bead portions 112 includes bead core 160, respectively.

In an example shown in Fig. 4, carcass 120, including at least one carcass ply (illustrated as one in Fig. 4), extends in an toroidal form between bead cores 16 included in bead portions 112. The carcass ply in carcass 120 may be, for example, a cord made of steel or an organic fiber having a rubber coating.

In an example shown in Fig, 4, carcass 120 includes main body 120a that extends in an toroidal form between bead cores 16; and a pair of folded portions 120b that are folded from the inner side in a radial direction of the tire toward the outer side in a width direction of the tire around bead cores 160, at both sides to the tire center line CL.

In an example shown in Fig. 4, inner liner 180 for preventing air leaks of the tire is provided inside tread portion 110 and side portion 111. At an outer side in a radial direction of the tire of tread portion 110, at a region corresponding to a crown of carcass 120, belt 130 formed of at least one belt layer (illustrated as one in Fig. 4) is disposed. The belt layer is formed by, for example, winding a reinforcing cord having a resin coating around a portion to which the belt layer is to be provided.

In an example shown in Fig. 4, bead portion 112 includes bead member 150 that is formed of bead filler 170 and bead core 160. Bead core 160 is positioned at an inner side in a radial direction of the tire of bead filler 170 and includes a metallic cord such as a steel cord. In an example shown in Fig. 4, bead member 150 is embedded in rubber 140.

In an example shown in Fig. 4, belt 130 and bead core 160 may be formed from the meal-resin composite member as described above. In that case, either one of belt 130 or bead core 160 may be formed from the meal-resin composite member as described above, or both of belt 130 and bead core 160 may be formed from the meal-resin composite member as described above.

Fig. 5 is an enlarged drawing of bead member 150 of tire 11 shown in Fig. 4. In an example shown in Fig. 5, bead core 160 that constitutes bead member 150 has plural bead wires 162a, cover resin 162 that covers bead wires 162a, and cover layer 165 that covers cover resin 162. Although bead core 160 shown in Fig. 5 includes plural bead wires 162a, the number of bead wires 162a is not particularly limited and may be one or more than one.

In an example of Fig. 5, although cover layer 165 of bead core 160 is integrally formed of the same material as bead filler 170, cover layer 165 of bead core 160 may be formed of a different material from a material for bead filler 170. It is also possible to omit cover layer 165.

Any known material may be used for bead wires 162a, and steel cord may be used, for example. The steel cord may be a steel monofilament or a steel twisted cord. It is also possible to use an organic fiber or a carbon fiber.

Any known material may be used for bead filler 170 that constitutes bead member 150 or cover layer 165 for bead core 160, and a rubber material or a resin material may be used, for example. From the viewpoint of improving the rigidity and reducing the weight, a resin material is preferably used. It is also possible to use the resin composition according to the present embodiment for a tire as described above.

Cover resin 162 may cover bead wires 162a in a direct manner, or may cover bead wires 162a via an adhesive layer (not illustrated). Any known material may be used for cover resin 162 or an adhesive layer. For example, it is possible to use the resin composition according to the present embodiment for a tire as described above.

[Examples]

In the following, the present disclosure will be described more concretely by way of the Examples, but the present disclosure is not restricted thereto.

[Examples 1-12 and Comparative Examples 1-5]

Resin compositions of Examples 1-12 and Comparative Examples 1-5 were prepared by mixing the materials in

the amounts (parts by mass) described in Table 1. Details of the materials shown in Table 1 are as follows. The results of evaluations (1) to (3) of the resin compositions are shown in Table 1.

<Resin having ester bond>

TPC1: polyester thermoplastic elastomer having maleic anhydride group (Mitsubishi Chemical Corporation, PREMALLOY GQ742, maleic anhydride equivalent amount: approximately 9.5 $\times$ $10^{-5}$ eq/g)
TPC2: polyester thermoplastic elastomer having maleic anhydride group (Mitsubishi Chemical Corporation, PREMALLOY GQ730, maleic anhydride equivalent amount: approximately 9.5 $\times$ $10^{-5}$ eq/g)
TPC3: polyester thermoplastic elastomer (DuPont-Toray Co., Ltd., HYTREL 5557)
TPC4: polyester thermoplastic elastomer (DuPont-Toray Co., Ltd., HYTREL 4767N)
PBT: polybutylene terephthalate (Toray Industries, Inc., TORAYCON 1401X06, MFR: 22)

<Glyceride compound>

Glyceride compound 1: epoxy-modified linseed oil (Adeka Corporation, ADEKA CIZER O-180A)
Glyceride compound 2: epoxy-modified soybean oil (Adeka Corporation, ADEKA CIZER 0-130)
Glyceride compound 3: linseed oil (Yamakei Sangyo Corporation, linseed oil for industrial use)

(1) Deterioration test under high-temperature and high-humidity environment

A plate-shaped sample having a thickness of 2 mm is prepared from the resin composition by injection molding. The sample is left to stand under an environment at a temperature of 80°C and a humidity of 95% for 2 weeks. The molecular weight of the sample before and after the test is measured by GPC using a HFIP solvent as an eluent, and the measured values are compared.

A: the decrease in molecular weight during the test is not greater than 1% by mass
B: the decrease in molecular weight during the test is greater than 1% by mass but not greater than 5% by mass
C: the decrease in molecular weight during the test is greater than 5% by mass

(2) Bleed out

The sample is left to stand under the conditions of 40°C, 50°C and 60°, for 1 month. Thereafter, existence of a bleeding substance at a surface of the sample is determined by visual observation at each temperature, and existence of tackiness at a surface of the sample is determined by palpation.

A: the sample does not have a bleeding substance and tackiness
B: the sample has a bleeding substance and tackiness

(3) Adhesion

The resin composition is melted and attached to a brass steel cord by injection molding (attachment length: 20 mm, cord diameter: 1 mm, twisted product of 7 cords). Thereafter, a pull-out test is conducted at a pull-out rate of 1 mm/s.

A: the pull-out force is 600 N or more
B: the pull-out force is less than 600 N

The evaluation of adhesion is conducted only in the cases in which a polyester thermoplastic elastomer having a maleic anhydride group is used as a resin having an ester bond.

Table 1

| | | Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Resin having ester bond | TPC1 | 100 | 100 | 100 | 100 | 100 | 100 | - | - | - | - | 100 | 100 |
| | TPC2 | - | - | - | - | - | - | 100 | - | - | - | - | - |
| | TPC3 | - | - | - | - | - | - | - | 100 | - | - | - | - |
| | TPC4 | - | - | - | - | - | - | - | - | 100 | - | - | - |
| | PBT | - | - | - | - | - | - | - | - | - | 100 | - | - |
| Glyceride compound | Glyceride compound 1 | 1 | 3 | 5 | 10 | 20 | 30 | 5 | 5 | 5 | 5 | - | - |
| | Glyceride compound 2 | - | - | - | - | - | - | - | - | - | - | 5 | - |
| | Glyceride compound 3 | - | - | - | - | - | - | - | - | - | - | - | 5 |
| (1) Deterioration test | | B | A | A | A | A | A | A | A | A | A | A | A |
| (2) Bleed out | | A | A | A | A | A | B | A | A | A | A | A | B |
| (3) Adhesion | | A | A | A | A | A | A | A | - | - | - | A | A |

| | | Com parative Examples | | | | |
|---|---|---|---|---|---|---|
| | | 1 | 2 | 3 | 4 | 5 |
| Resin having ester bond | TPC1 | 100 | - | - | - | - |
| | TPC2 | - | 100 | - | - | - |
| | TPC3 | - | - | 100 | - | - |
| | TPC4 | - | - | - | 100 | - |
| | PBT | - | - | - | - | 100 |
| Glyceride compound | Glyceride compound 1 | - | - | - | - | - |
| | Glyceride compound 2 | - | - | - | - | - |
| | Glyceride compound 3 | - | - | - | - | - |
| (1) Deterioration test | | C | C | C | C | C |
| (2) Bleed out | | A | A | A | A | A |
| (3) Adhesion | | A | A | - | - | - |

In the results of the evaluation tests shown in Table 1, the data of Examples 5, 6, 7, 10, 11 and 12 are predicted values, and the other data are obtained by actually performing the evaluation tests.

As shown in Table 1, the resin compositions of the Examples, including a glyceride compound and a resin having an ester bond, exhibit superior results in the deterioration test under a high-temperature and high-humidity environment, as compared with the resin compositions of the Comparative Examples, including a resin having an ester bond but not including a glyceride compound.

Further, the resin compositions of Examples 1-7, 11 and 12, including a glyceride compound and a polyester thermoplastic elastomer having a maleic anhydride group, exhibit the equal level of adhesion as the resin compositions of Comparative Examples 1 and 2, including a polyester thermoplastic elastomer having a maleic anhydride group but not including a glyceride compound. The results suggest that a glyceride compound does not react with a maleic anhydride group, whereby the adhesion of the resin composition is not impaired.

## Claims

1. A resin-metal composite member for a tire, comprising a metal member and a resin layer that is disposed around the metal member, the resin layer comprising a glyceride compound and a resin having an ester bond.

2. The resin-metal composite member for a tire according to claim 1, wherein the resin layer has an adhesive layer that is disposed around the metal member and a coating resin layer that is disposed around the adhesive layer, and wherein at least one of the adhesive layer or the coating resin layer comprises the glyceride compound and the resin having an ester bond.

3. The resin-metal composite member for a tire according to claim 1 or claim 2, wherein the glyceride compound has an epoxy group.

4. The resin-metal composite member for a tire according to any one of claim 1 to claim 3, wherein the glyceride compound is an oil or a fat.

5. The resin-metal composite member for a tire according to any one of claim 1 to claim 4, wherein an amount of the glyceride compound in the resin layer is from 3 parts by mass to 20 parts by mass with respect to 100 parts by mass of the resin having an ester bond.

6. The resin-metal composite member for a tire according to any one of claim 1 to claim 5, wherein the resin having an ester bond is at least one selected from the group consisting of a polyester thermoplastic elastomer and a polyester thermoplastic resin.

7. The resin-metal composite member for a tire according to any one of claim 1 to claim 6, wherein the resin having an ester bond has a maleic anhydride group.

8. A tire comprising the resin-metal composite member for a tire according to any one of claim 1 to claim 7.

9. The tire according to claim 8, wherein the resin-metal composite member for a tire constitutes a reinforcing belt member that is disposed at an outer periphery of a tire frame or a carcass of the tire.

10. The tire according to claim 8, wherein the resin-metal composite member for a tire constitutes a bead member that is disposed at a position at which the tire contacts a rim.

**Patentansprüche**

1. Harz-Metall-Verbundkörper für einen Reifen, umfassend einen Metallkörper und eine Harzschicht, die um den Metallkörper herum angeordnet ist, wobei die Harzschicht eine Glyceridverbindung und ein Harz umfasst, das eine Esterbindung aufweist.

2. Harz-Metall-Verbundkörper für einen Reifen nach Anspruch 1, wobei die Harzschicht eine klebende Schicht, die um den Metallkörper herum angeordnet ist, und eine Beschichtungsharzschicht aufweist, die um die klebende Schicht herum angeordnet ist und wobei mindestens eine von der klebenden Schicht oder der Beschichtungsharzschicht die Glyceridverbindung und das Harz, das eine Esterbindung aufweist, umfasst.

3. Harz-Metall-Verbundkörper für einen Reifen nach Anspruch 1 oder Anspruch 2, wobei die Glyceridverbindung eine Epoxygruppe aufweist.

4. Harz-Metall-Verbundkörper für einen Reifen nach einem von Anspruch 1 bis Anspruch 3, wobei die Glyceridverbindung ein Öl oder ein Fett ist.

5. Harz-Metall-Verbundkörper für einen Reifen nach einem von Anspruch 1 bis Anspruch 4, wobei eine Menge der Glyceridverbindung in der Harzschicht 3 Masseteile bis 20 Masseteile mit Bezug auf 100 Masseteile des Harzes, das eine Esterbindung aufweist, beträgt.

6. Harz-Metall-Verbundkörper für einen Reifen nach einem von Anspruch 1 bis Anspruch 5, wobei das Harz, das eine Esterbindung aufweist, mindestens eines ist ausgewählt aus der Gruppe bestehend aus einem thermoplastischen Polyesterelastomer und einem thermoplastischen Polyesterharz.

7. Harz-Metall-Verbundkörper für einen Reifen nach einem von Anspruch 1 bis Anspruch 6, wobei das Harz, das eine Esterbindung aufweist, eine Maleinsäureanhydridgruppe aufweist.

8. Reifen umfassend den Harz-Metall-Verbundkörper für einen Reifen nach einem von Anspruch 1 bis Anspruch 7.

9. Reifen nach Anspruch 8, wobei der Harz-Metall-Verbundkörper für einen Reifen einen verstärkenden Gürtelkörper darstellt, der auf einer Außenperipherie eines Reifenrahmens oder einer Karkasse des Reifens angeordnet ist.

10. Reifen nach Anspruch 8, wobei der Harz-Metall-Verbundkörper für einen Reifen einen Reifenwulstkörper darstellt, der an einer Position angeordnet ist, an der der Reifen eine Felge kontaktiert.

## Revendications

1. Élément composite résine-métal pour un pneumatique, comprenant un élément métallique et une couche de résine qui est disposée autour de l'élément métallique, la couche de résine comprenant un composé glycéride et une résine ayant une liaison ester.

2. Élément composite résine-métal pour un pneumatique selon la revendication 1, dans lequel la couche de résine présente une couche adhésive qui est disposée autour de l'élément métallique et une couche de résine de revêtement qui est disposée autour de la couche adhésive, et dans lequel au moins l'une de la couche adhésive ou de la couche de résine de revêtement comprend le composé glycéride et la résine ayant une liaison ester.

3. Élément composite résine-métal pour un pneumatique selon la revendication 1 ou la revendication 2, dans lequel le composé glycéride possède un groupe époxy.

4. Élément composite résine-métal pour un pneumatique selon l'une quelconque de la revendication 1 à la revendication 3, dans lequel le composé glycéride est une huile ou une graisse.

5. Élément composite résine-métal pour un pneumatique selon l'une quelconque de la revendication 1 à la revendication 4, dans lequel une quantité du composé glycéride dans la couche de résine est de 3 parties en masse à 20 parties en masse par rapport à 100 parties en masse de la résine ayant une liaison ester.

6. Élément composite résine-métal pour un pneumatique selon l'une quelconque de la revendication 1 à la revendication 5, dans lequel la résine ayant une liaison ester est au moins l'une sélectionnée dans le groupe constitué d'un élastomère thermoplastique de polyester et d'une résine thermoplastique de polyester.

7. Élément composite résine-métal pour un pneumatique selon l'une quelconque de la revendication 1 à la revendication 6, dans lequel la résine ayant une liaison ester possède un groupe anhydride maléique.

8. Pneumatique comprenant l'élément composite résine-métal pour un pneumatique selon l'une quelconque de la revendication 1 à la revendication 7.

9. Pneumatique selon la revendication 8, dans lequel l'élément composite résine-métal pour un pneumatique constitue un élément de courroie de renforcement qui est disposé au niveau d'une périphérie externe d'une armature de pneumatique ou d'une carcasse de pneumatique.

10. Pneumatique selon la revendication 8, dans lequel l'élément composite résine-métal pour un pneumatique constitue un élément de talon qui est disposé en une position où le pneumatique entre en contact avec une jante.

FIG. 1A

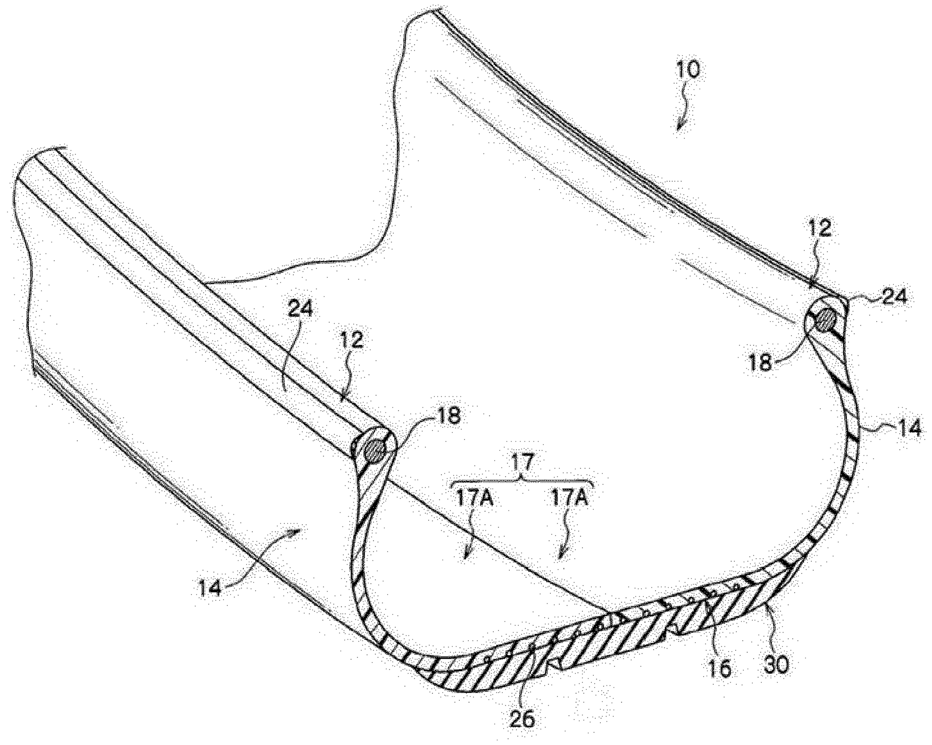


FIG. 1B

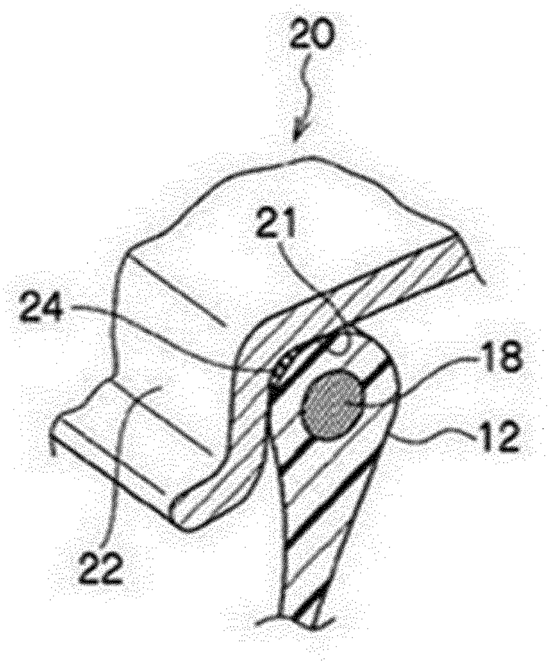

FIG. 2

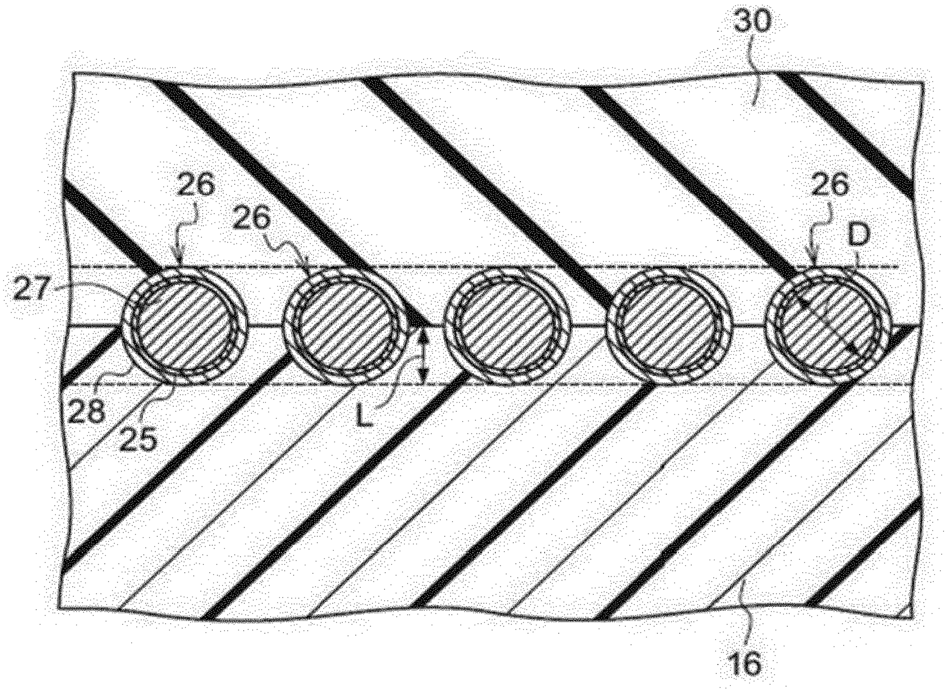

FIG. 3

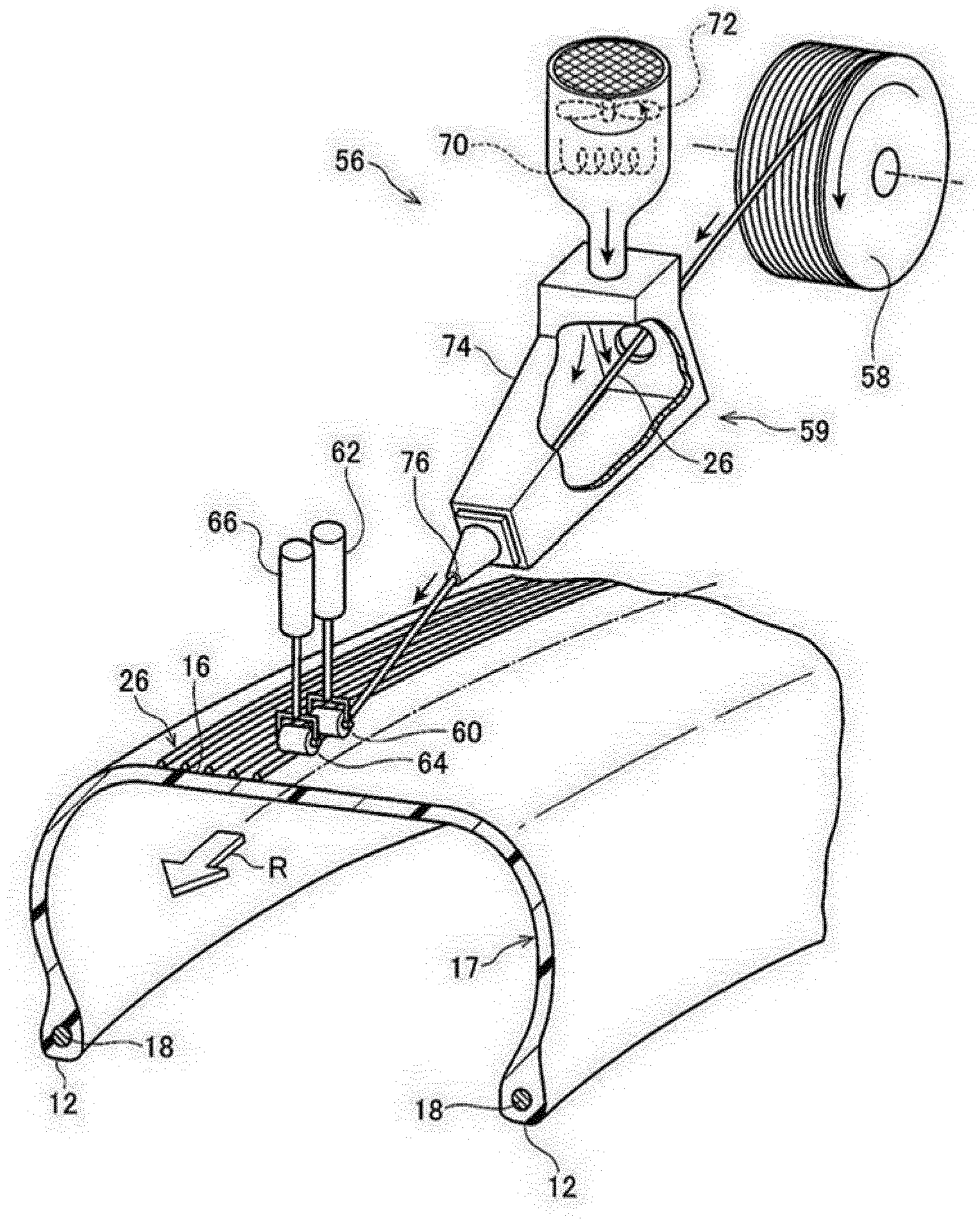

FIG. 4

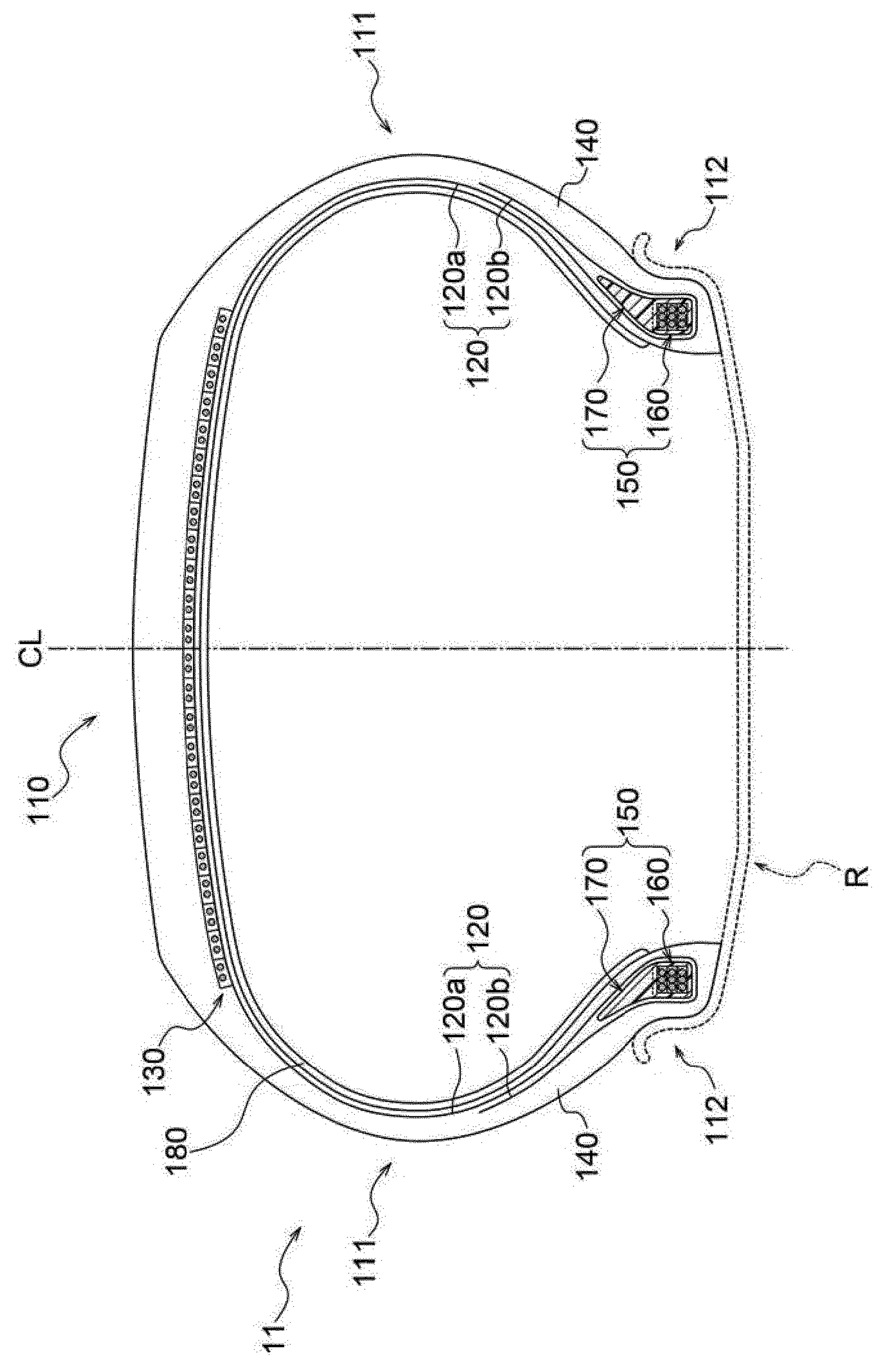

FIG. 5

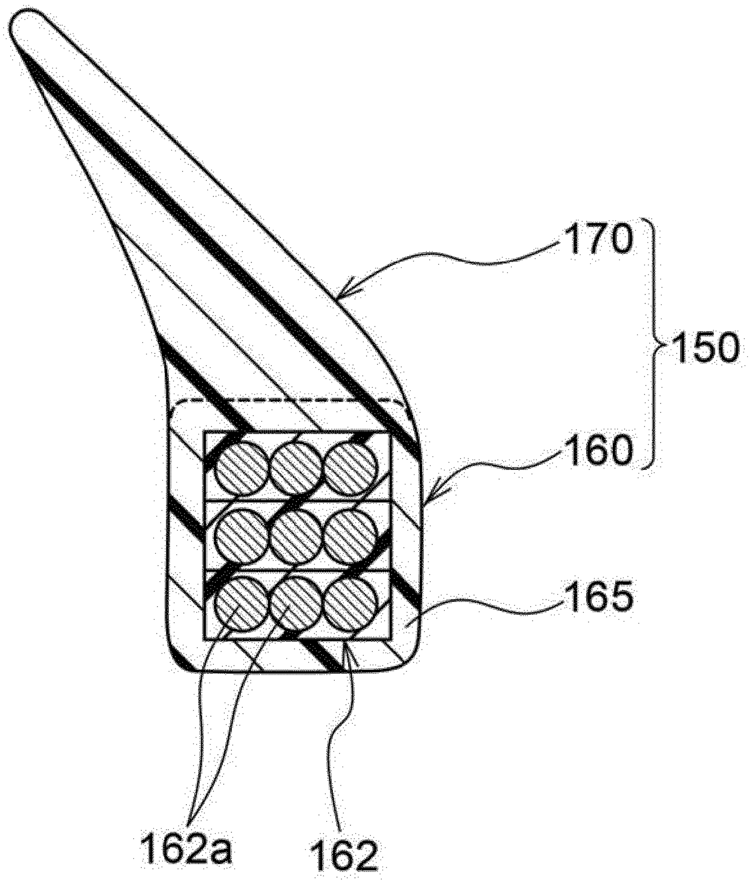

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046025 A
- US 2010256261 A1
- US 2016053096 A1
- JP 2008274206 A
- JP 2008274207 A
- EP 1782966 A


### Non-patent literature cited in the description


- **BARRETT L W et al.** *Journal of Applied Polymer Science*, 1993, vol. 48 (6), 1035-1050
- **BUONG CHIENG et al.** *Molecules*, 2014, vol. 19 (10), 16024-16038